(19) Europäisches Patentamt
European Patent Office
Office européen des brevets

(11) Numéro de publication : 0 373 059 B1

# (12) FASCICULE DE BREVET EUROPEEN

(45) Date de publication du fascicule du brevet : **09.06.93 Bulletin 93/23**

(51) Int. Cl.$^5$ : **C04B 35/58,** D01F 9/10, C08L 83/16

(21) Numéro de dépôt : **89403351.3**

(22) Date de dépôt : **04.12.89**

## (54) Compositions de précurseurs de céramiques à base de polysilazanes et céramiques obtenues par pyrolyse desdites compositions.

(30) Priorité : **07.12.88 FR 8816065**

(43) Date de publication de la demande : **13.06.90 Bulletin 90/24**

(45) Mention de la délivrance du brevet : **09.06.93 Bulletin 93/23**

(84) Etats contractants désignés : **AT BE CH DE ES FR GB GR IT LI LU NL SE**

(56) Documents cités :
**EP-A- 0 202 170**
**FR-A- 2 190 764**
**US-A- 4 720 532**

(73) Titulaire : **ELF ATOCHEM S.A.**
**4 & 8, Cours Michelet La Défense 10**
**F-92800 Puteaux (FR)**

(72) Inventeur : **Colombier, Christian**
**3, Rue de Sèze**
**I-69006 Lyon (FR)**

(74) Mandataire : **Rochet, Michel et al**
**ELF ATOCHEM S.A. Département Propriété Industrielle 4-8, Cours Michelet La Défense 10 - Cedex 42**
**F-92091 Paris-La-Défense (FR)**

EP 0 373 059 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention a pour objet une composition de précurseurs de céramiques à base de polysilazanes. Elle concerne également les revêtements et articles formés à partir de cette composition et susceptibles d'être pyrolysés en matériaux céramiques.

Dans la demande de brevet FR-A-2190764, on décrit des articles consistant en mélanges homogènes de carbure et de nitrure de silicium. Ces articles sont obtenus par pyrolyse d'un silazane résultant lui-même de la réaction d'un halogénosilane avec un composé portant un ou plusieurs groupes $NH_2$ ou NH , par exemple des amines primaires ou secondaires, des amides, des hydrazines ou des hydrazides.

Dans la demande de brevet européen EP-A- 202170, on décrit une composition polysilazane pouvant réticuler comportant au moins un polysilazane contenant au moins 2 groupes ≡ SiH par molécule et au moins 2 groupes SiR2, R étant un radical hydrocarboné insaturé, et une quantité catalytiquement efficace d'un métal ou d'un composé métallique catalysant la réaction d'hydrosilylation ≡ SiH/ = SiR2. Le polysilazane peut également dériver de divers composés portant un ou plusieurs groupements $NH_2$ ou NH, parmi lesquels on trouve l'ammoniac, les amines, les hydrazines.

Il convient de noter qu'aucun de ces documents ne décrit ou ne suggère des mélanges de silazanes ou de polysilazanes.

L'invention a pour objet une composition de précurseurs de céramiques comprenant :

- au moins un précurseur comprenant une pluralité de motifs de formule :

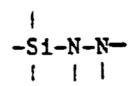

(I)

- et au moins un précurseur comprenant une pluralité de motifs de formule :

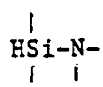

(II)

formules dans lesquelles les valences disponibles des atomes de silicium et d'azote sont liées à un radical hydrocarboné aliphatique saturé ou insaturé, ou à un radical aryle mono- ou polycyclique, alkylaryle ou arylalkyle, ces substituants pouvant être différents ou identiques, une au moins des valences disponibles de l'atome de silicium ou des atomes d'azote dans la formule I et/ou l'atome d'azote de la formule II pouvant porter un atome d'hydrogène, l'atome de silicium de la formule II pouvant porter un second atome d'hydrogène, l'atome d'azote dans la même formule II portant alors un radical méthyle.

L'expression "valences disponibles" est utilisée présentement pour tenir compte des liaisons entre les motifs de formules I ou II dans les enchaînements polymériques des précurseurs.

A titre d'exemples spécifiques des substituants des atomes de silicium ou d'azote dans les formules précédentes, on citera en particulier les radicaux hydrocarbonés aliphatiques saturés renfermant de 1 à 8 atomes de carbone ; les radicaux insaturés tels que vinyle, allyle ; les radicaux alicycliques renfermant de 3 à 7 atomes de carbone ; les radicaux phényle, benzyle, phényléthyle, tolyle, xylyle ou naphtyle.

D'une manière préférentielle, l'atome de silicium de la formule I porte un atome d'hydrogène ou un substituant méthyle, le second substituant de l'atome de silicium de la formule I étant un substituant méthyle, éthyle, phényle ou, plus préférentiellement, vinyle. Dans la formule II, l'atome de silicium porte préférentiellement un radical méthyle.

Les compositions de précurseurs conformes à l'invention peuvent comprendre de 10 à 90 % en poids de précurseur(s) de formule I et 90 à 10 % de précurseur(s) de formule II. De préférence lesdites compositions comprennent de 10 à 70 % en poids de précurseur(s) de formule I et de 90 à 30 % en poids de précurseur(s) de formule II. Parmi ces compositions, on choisira encore avantageusement celles comprenant 10 à 55 % de précurseur(s) de formule I.

Les précurseurs de formule I peuvent être préparés par réaction d'au moins un halogénosilane de formule :

$$Si(Y)_a \qquad (III)$$

avec au moins une hydrazine de formule :

$$-\underset{|}{N}-\underset{|}{N}- \qquad (IV)$$

formules dans lesquelles Y représente un atome d'halogène et notamment de chlore, a représente un nombre compris entre 1 et 4 inclus et, de préférence, environ 2, la ou les valences libres du silicium et de l'azote étant liées à un radical hydrocarboné aliphatique insaturé ou un des autres atomes ou radicaux mentionnés dans le cadre de la signification de la formule (I), deux au moins des valences disponibles des atomes d'azote étant liées à un atome d'hydrogène.

Les précurseurs de formule II peuvent être préparés par réaction d'un hydrogénohalosilane de formule :

$$Si(H)_c(Y)_b \qquad (V)$$

avec de l'ammoniac ou une amine $-NH_2$ lorsque c = 2, dans la formule V, formules dans lesquelles le symbole Y de la formule V possède la signification donnée précédemment, b = 1, 2 ou 3, c = 4-b, la ou les valences libres du silicium et éventuellement de l'azote sont liées à l'un des radicaux hydrocarbonés mentionnés précédemment ou à un atome d'hydrogène (pour l'hydrogénohalosilane).

A titre de variante, les précurseurs de formule I peuvent être préparés par réaction d'un précurseur de formule II, obtenu par exemple de la manière indiquée ci-avant avec une hydrazine de formule IV.

A titre d'exemples spécifiques des halogénosilanes de formule (III) ou (IV), on citera notamment les produits répondant aux formules suivantes :

$SiCl_4$, $(CH_3)_2SiCl_2$, $(CH_3)_3SiCl$
$CH_3SiCl_3$, $(C_6H_5)_2SiCl_2$, $(C_6H_5)(CH_3)SiCl_3$
$H_2SiCl_2$, $(CH_3)_2HSiCl$, $HSiCl_3$
$CH_3(CH_2{=}CH)SiCl_2$, $(CH_3)_2(CH_2{=}CH)SiCl$

et

$(CH_3)HSiCl_2$

Il ressort de la signification donnée à titre préférentiel pour a qu'on utilise avantageusement dans l'invention un ou plusieurs dihalogénosilanes ou un mélange comprenant un ou des dihalogénosilanes et un mono- ou un trihalogénosilane et/ou $SiCl_4$. Le pourcentage d'atomes de chlore apportés par le trihalogénosilane dans le mélange avec le dihalogénosilane n'excède de préférence pas 70 %. Dans le cas de monohalogénosilane ou de $SiCl_4$, ce pourcentage n'excède de préférence pas 30 %.

A titre d'exemples spécifiques des hydrazines de formule (IV) on citera notamment l'hydrazine non substituée ($N_2H_4$), la méthylhydrazine, l'éthylhydrazine, la phénylhydrazine, la cyclohexylhydrazine, la diméthylhydrazine, la diéthylhydrazine, la diphénylhydrazine, la dibenzylhydrazine, l'α-naphtylhydrazine, la diisopropylhydrazine, les ditolylhydrazines, la di-isobutylhydrazine, la (diméthyl-2,3 phényl) hydrazine, la di(α-naphtyl)hydrazine.

Pour la préparation des précurseurs de formule I par le premier procédé susmentionné, on utilise avantageusement l'hydrazine IV en quantité telle que le nombre de moles d'hydrazine soit supérieur au nombre de moles d'atomes d'halogène Y additionné au nombre de moles d'atomes de silicium. Cet excès peut atteindre par exemple 20 %.

La réaction précitée est avantageusement conduite en présence d'une amine tertiaire telle que la triéthylamine, la triméthylamine, la triphénylamine ou la pyridine.

Cette amine a pour rôle principal de limiter la formation d'halogénohydrate d'hydrazine par la formation d'un halogénohydrate de cette amine.

D'une manière générale la quantité d'amine est d'au moins une molécule d'amine par atome d'halogène Y. De préférence, ce taux est excèdentaire, par exemple de 20 %. Lorsqu'on utilise une amine le nombre de moles d'hydrazine peut être supérieur au seul nombre de moles d'atomes de silicium.

Si on utilise un excès d'halogénosilane au sens entendu ci-dessus, il est avantageux, après avoir fait réagir l'hydrazine et le ou les halogénosilanes, de procéder à l'introduction d'un excès d'un réactif permettant de limiter la teneur en halogène du produit final, ce réactif pouvant être d'une manière générale une amine ou l'ammoniac par exemple.

Cette réaction est avantageusement conduite en atmosphère inerte, par exemple sous courant d'azote.

La température est généralement comprise entre -10 et 100°C. On peut mettre en oeuvre les seuls réactifs précités (halogénosilane, et hydrazine), le cas échéant additionnés de l'amine tertiaire. Préférentiellement, on peut faire appel à un solvant de polysilazane final, pouvant notamment être choisi parmi les hydrocarbures aliphatiques ou aromatiques, éventuellement halogénés tels que le toluène, le chlorure de méthylène, le benzène, le xylène, l'hexane, ou les ethers tels que l'éther isopropylique, l'éther diéthylique.

La réaction peut être conduite à pression atmosphérique, sous pression ou sous pression réduite. On opère

de préférence à pression atmosphérique.

A l'issue de la réaction, dont la durée peut être comprise entre quelques dizaines de minutes et quelques heures, on élimine les halogénohydrates, par exemple par filtration sous pression réduite ou sous pression d'azote, et élimine le solvant éventuellement utilisé et l'excès d'hydrazine ou d'amine tertiaire, par exemple par évaporation sous pression réduite. On recueille ainsi des polysilazanes sous forme de solides, rigides ou gommeux, ou d'huile plus ou moins visqueuse.

Pour la préparation des précurseurs de formule II, on met avantageusement en oeuvre une quantité d'ammoniac ou d'amine telle que le nombre de moles d'ammoniac ou d'amine soit supérieur au nombre de moles d'atomes d'halogène Y additionné au nombre de moles d'atomes de silicium. Cet excès peut atteindre 20 %. L'ammoniac peut être mis en oeuvre sous forme diluée, par exemple, au moyen d'azote. La réaction peut se faire à une température pouvant être comprise entre -20°C et 100°C ou la température du solvant éventuel, lorsque cette température est inférieure à 100°C à pression atmosphérique. On peut également opérer à pression subatmosphérique ou superatmosphérique.

La réaction est avantageusement conduite en milieu solvant organique. Comme exemple de tels solvants, on peut citer notamment les hydrocarbures, éventuellement chlorés, tels que le chlorure de méthylène, le tétrachlorure de carbone, le toluène, le benzène.

Au cours de cette réaction, l'acide halohydrique formé précipite sous forme d'halogénure d'ammonium qui peut être éliminé par filtration. Le solvant du polysilazane peut être éliminé par évaporation.

D'une manière générale, on recueille à l'issue de cette réaction, qui peut durer de quelques dizaines de minutes à quelques heures un ou plusieurs polysilazanes cycliques ou linéaires renfermant des motifs de formule II.

Pour la mise en oeuvre du second procédé de préparation des précurseurs de formule I, on peut faire réagir avec une hydrazine IV un précurseur de formule II, préparé par exemple comme décrit ci-avant.

D'une manière générale, on met en oeuvre une quantité d'hydrazine suffisante pour permettre la substitution des groupements -NH- dans la formule II par les groupements

$$-\underset{|}{N}-\underset{|}{N}-$$

de la formule I.

L'hydrazine de formule IV est avantageusement mise en oeuvre sous forme anhydre et la température de la réaction peut varier par exemple entre 20 et 100°C, sous pression atmosphérique. La réaction s'accompagne d'un dégagement d'ammoniac, la cession de ce dégagement marquant la fin de la réaction, au bout d'une période pouvant durer de quelques dizaines de minutes à quelques heures. Il est avantageux d'introduire dans le milieu réactionnel un solvant organique, pouvant par exemple être choisi parmi les produits cités précédemment. Après décantation de la phase lourde, contenant l'excès d'hydrazine n'ayant pas réagi et l'évaporation du solvant, on recueille un polyhydrosilazane renfermant une pluralité de motifs de formule I sous forme de liquide visqueux.

Les compositions conformes à l'invention peuvent être préparées par simple mélange, de préférence sous atmosphère inerte, par exemple sous azote des précurseurs de formule I et II. Ce mélange peut être effectué à température ambiante et plus généralement entre 0 et 100°C.

Les compositions peuvent être ensuite mises en forme à température ambiante ou après chauffage à une température pouvant atteindre 300°C.

On peut former, à partir de solutions desdites compositions des revêtements sur des supports tels que métaux (silicium métallique, acier, molybdène, alliages riches en nickel), ou céramiques, l'épaisseur desdits revêtements pouvant par exemple être de l'ordre de 0,01 à 100 µm. Dans le cas où le revêtement contient un additif tel que poudres de carbure ou nitrure de silicium, cette épaisseur peut atteindre plusieurs millimètres.

L'utilisation des précurseurs hydrogénés

$$(-\underset{|}{SiH}-\underset{|}{N}-\underset{|}{N}- \quad \text{et} \quad -\underset{|}{SiH}-\underset{|}{N}-)$$

permet de contrôler la viscosité des compositions, le premier cité servant à augmenter la viscosité, le second à la diminuer. Par ailleurs, de tels précurseurs conduisent à des produits thermoréticulables, ce qui présente un intérêt dans certaines applications, comme le filage.

Les compositions mises en forme peuvent ensuite être pyrolysées par chauffage à une température de l'ordre de 800 à 1500°C, en céramique contenant Si, N éventuellement 0 et/ou C.

La pyrolyse peut être conduite en atmosphère neutre, c'est-à-dire sous azote ou argon, ou en atmosphère d'ammoniac si l'on veut faire baisser la teneur en carbone de la céramique et même l'éliminer.

Les compositions de précurseurs conformes à l'invention conduisent, après pyrolyse, à des céramiques

avec un rendement en céramique supérieur à la fois à la moyenne arithmétique du mélange des deux précurseurs et, dans certains cas, au rendement observé séparément avec les précurseurs de formules I et II.

Dans les exemples, les valeurs de rendements en céramique (= poids de céramique obtenue/poids de précurseur engagé X 100) ont été mesurées par analyse thermogravimétrique sans confinement et sous balayage d'azote. La montée en température était de 100°C/heure et était suivie d'un palier d'une heure de 1000°C, température maximale.

EXEMPLES 1 A 5

A - Synthèse d'un ammonolysat de $CH_3SiH\ Cl_2$ (précurseur 1A)

La réaction a lieu dans un réacteur double enveloppe, équipé d'un thermomètre, d'un système d'agitation et d'un condenseur (15°C).

Après purge du réacteur à l'azote, on y verse à 15°C 800 ml de toluène et 1,2 Mole de $CH_3SiHCl_2$. On refroidit le réacteur à 2°C et introduit sous agitation 4,66 moles de $NH_3$ dilués avec 2,33 moles de $N_2$ en 6 heures à débit constant. Pendant la dernière heure, on élève la température du réacteur à 20°C. On laisse sous faible agitation à 15°C pendant 15 heures. On filtre le chlorure d'ammonium sous azote et on le lave par 2 fois 300 ml de toluène. On procède alors sur la solution d'ammonolysat à l'évaporation du solvant à 60°C sous vide à l'aide d'un évaporateur rotatif. On finit l'évaporation en laissant 1/2 heure à 60°C sous environ 666,6 Pa (5 mm de Hg). On recueille 56 g d'ammonolysat, ce qui correspond à un rendement de 79,1 % fondé sur la formation de motifs :

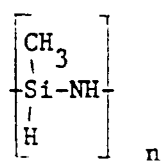

Cet ammonolysat présente une viscosité d'environ 0,04 Pa.s (0,4 poises) à 25°C

B - Synthèse d'un dérivé hydraziné de $CH_3SiCH{=}CH_2Cl_2$ (précurseur 1B)

On utilise l'appareillage décrit ci-avant sous A. On coule dans le réacteur à température ambiante 600 ml de toluène, 0,8 mole de méthylvinyldichlorosilane $CH_3SiCH{=}CH_2Cl_2$, 0,2 mole de méthyltrichlorosilane et 2,64 moles de triéthylamine. La température du réacteur étant maintenue à 15°C, on coule en 30 mn et sous agitation 1,2 mole d'hydrazine. Tout en maintenant l'agitation, on chauffe le réacteur à 70°C. Au bout de 6 heures on introduit, toujours à 70°C et sous agitation, 0,5 mole d'ammoniac. On refroidit le réacteur à 15°C et on laisse 15 heures sous faible agitation. On filtre le précipité sous azote et on le lave par 2 fois 400 ml de toluène. On procède alors sur la solution à l'évaporation du solvant à 60°C sous vide à l'aide d'un évaporateur rotatif. On finit l'évaporation en laissant 1/2 heure à 60°C sous environ 666,6 Pa (5mm de Hg). On recueille environ 83 g de polysilazane (précurseur 1B). Il contient environ 0,64 mole de liaison N-N pour 100 g de produit.

C - Préparation et pyrolyse des mélanges des précurseurs 1A et 1B

On mélange les précurseurs 1A et 1B sous azote et en différentes proportions. On détermine ensuite les rendements en céramiques sous azote à 1000°C.

Le tableau ci-dessous rassemble les résultats.

| EXEMPLES | * | 1 | 2 | 3 | 4 | 5 | * |
|---|---|---|---|---|---|---|---|
| Polysilazane 1A (% en poids) | 100 | 80 | 60 | 50 | 40 | 20 | 0 |
| Polysilazane 1B (% en poids) | 0 | 20 | 40 | 50 | 60 | 80 | 100 |
| Rendement en céramique (% en poids) | 41,8 | 68 | 68,2 | 67,2 | 62,8 | 62 | 59,7 |

* à titre comparatif

EXEMPLES 6 A 10

A - Préparation d'un dérivé hydraziné de $(CH_3)_2SiCl_2$

On procède comme dans la partie B de l'exemple 1 mais avec 1 mole de diméthyldichlorosilane, 3 moles de triéthylamine, 1,4 mole d'hydrazine et l'on n'introduit pas d'ammoniac en fin de réaction. On chauffe 6 heures à 60°C.

Après évaporation du solvant, on recueille 73,5 g de polysilazane liquide qui sera appelé précurseur 2A.

B - Préparation et pyrolyse des mélange de précurseurs 1A et 2A

On mélange les précurseurs 1A et 2A sous azote et en différentes proportions. On détermine ensuite les rendements en céramique sous azote à 1000°C.

Le tableau ci-dessous rassemble les résultats.

| EXEMPLES | * | 6 | 7 | 8 | 9 | 10 | * |
|---|---|---|---|---|---|---|---|
| Précurseur 1A (% en poids) | 100 | 90 | 80 | 60 | 50 | 30 | 0 |
| Précurseur 2A (% en poids) | 0 | 10 | 20 | 40 | 50 | 70 | 100 |
| Rendement en céramique (% en poids) | 41,8 | 43,9 | 44 | 40,25 | 38,05 | 23,6 | 2,2 |

* A titre comparatif

On constate que l'association des deux précurseurs 1A et 2A conduit également à un rendement en céramique supérieur à la moyenne arithmétique du mélange des deux précurseurs.

EXEMPLE 11

A - Synthèse d'un dérivé hydraziné de $CH_3SiHCl_2$ (précurseur 11A)

On utilise l'appareillage décrit dans l'exemple 1A. On coule dans le réacteur à température ambiante 600 ml de toluène, 1 mole d'hydrogénométhyldichlorosilane ($CH_3SiHCl_2$), 2,4 moles de triéthylamine. La double enveloppe du réacteur est parcourue par de l'eau à 15°C. On coule en 1 heure 1,2 mole d'hydrazine anhydre, le réacteur étant agité. On constate que la température monte de 16,5 à 23°C. Après l'introduction d'hydrazine, on élève la température du réacteur à 70°C et on laisse sous agitation pendant 6 heures. On ramène ensuite le réacteur à 15°C et on laisse 15 heures sous faible agitation. On filtre le précipité sous azote et on le lave par 3 fois 300 ml de toluène.

On obtient ainsi une solution toluénique de polysilazane à≃ 4,6 % en poids. Si l'on procède sur 100 g de ladite solution à l'évaporation du solvant en évaporateur rotatif comme indiqué dans les exemples précédents, on obtient 4,6 g de polysilazane réticulé, solide, infusible et insoluble. Ce polysilazane présente un rendement en céramique de 72 %.

B - Préparation et pyrolyse des mélanges des précurseurs 1A et 11A

On mélange le précurseur 1A et la solution toluénique de précurseur 11A en différentes proportions. On procède ensuite à l'évaporation du solvant à l'évaporateur rotatif comme décrit dans les exemples précédents. On détermine ensuite les viscosités et rendements en céramique sous azote à 1000°C.

Le tableau ci-dessous rassemble les résultats :

| | | | | | |
|---|---|---|---|---|---|
| Polysilazane 1A (% en poids) | 100 | 75 | 50 | 25 | 0 |
| Polysilazane 11A (% en poids) | 0 | 25 | 50 | 75 | 100 |
| Viscosité Pa.s (poise) à 20°C | 0,04 (0.4) | 14,3 (143) | 320 (3200) | > 2000 (>20000) | solide réticulé infusible |
| Rendement en céramique à 1000°C sous $N_2$ | 41,8 | 65,2 | 67,2 | 69,4 | 72 |

Il convient de signaler que ces mélanges continuent d'évoluer vers des plus hautes viscosités à température ambiante et que cette évolution est d'autant plus rapide que la température est élevée et que la proportion de polysilazane 11A est élevée. On peut en effet constater que la viscosité à 70°C du mélange 25 % de 1A / 75 % de 11A passe de 100 Pa.s (1000 p) à 300 Pa.s (8000 p) en 30 minutes.

On a donc mis en évidence la possibilité d'obtenir une composition polysilazane de haute viscosité et réticulant thermiquement de façon à devenir infusible. Cette propriété est intéressante pour l'élaboration de fibres en céramique puisque la haute viscosité du précurseur est nécessaire au filage et que la réticulation du polymère est indispensable pour figer la fibre dans sa forme et éviter qu'elle ne fonde en début de pyrolyse.

EXEMPLE 12

A - Synthèse d'un dérivé hydraziné d'un mélange de $CH_3SiHCl_2$ (80 % mol.) et de $(CH_3)_2$ $SiCl_2$ (20 % mol.)

On procède comme pour l'exemple 11A, mais au lieu d'une mole d'hydrogénométhyldichlorosilane, on utilise un mélange de 0.8 mole d'hydrogénométhyldichlorosilane et 0.2 mole de diméthyldichlorosilane.

B - Préparation et pyrolyse des mélanges des précurseurs 1A et 12A

On mélange le précurseur 1A et la solution de précurseur 12A en différentes proportions. On procède ensuite à l'évaporation du solvant à l'évaporateur rotatif comme décrit dans les exemples précédents. On détermine ensuite les viscosités et rendements en céramique sous azote à 1000°C.

Le tableau ci-dessous rassemble les résultats :

| | | | | | |
|---|---|---|---|---|---|
| Polysilazane 1A (% en poids) | 100 | 75 | 50 | 25 | 0 |
| Polysilazane 12A (% en poids) | 0 | 25 | 50 | 75 | 100 |
| Viscosité Pa.s (poise) à 20°C | 0,04 (0.04) | 3,75 (37.5) | 153 (1530) | > 2000 (> 20000) | solide réticulé infusible |
| Rendement en céramique à 1000°C sous $N_2$ | 41,8 | 61,8 | 67,5 | 68,6 | 67.1 |

## Revendications

1. Composition de précurseurs de céramique, caractérisée en ce qu'elle comprend
   - au moins un précurseur comprenant une pluralité de motifs de formule :

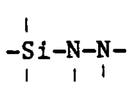

(I)

   - et au moins un précurseur comprenant une pluralité de motifs de formule :

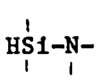

(II)

   formules dans lesquelles les valences disponibles des atomes de silicium et d'azote sont liées à un radical hydrocarboné aliphatique saturé ou insaturé, ou à un radical aryle mono- ou polycyclique, alkylaryle ou arylalkyle, ces substituants pouvant être différents ou identiques, une au moins des valences disponibles de l'atome de silicium ou des atomes d'azote dans la formule I et/ou l'atome d'azote de la formule II pouvant porter un atome d'hydrogène, l'atome de silicium de la formule II pouvant porter un second atome d'hydrogène, l'atome d'azote dans la même formule II portant alors un radical méthyle.

2. Composition selon la revendication 1, caractérisée en ce que dans les formules I et II les substituants des atomes de silicium sont choisis parmi les radicaux hydrocarbonés aliphatiques saturés renfermant de 1 à 8 atomes de carbone ; les radicaux insaturés tels que vinyle, allyle ; les radicaux alicycliques renfermant de 3 à 7 atomes de carbone ; les radicaux phényle, benzyle, phényléthyle, tolyle, xylyle ou naphtyle.

3. Composition selon l'une quelconque des revendications 1 ou 2, caractérisée en ce que l'atome de silicium de la formule I porte un atome d'hydrogène ou un substituant méthyle et second un substituant choisi parmi les groupements méthyle, éthyle, phényle ou vinyle.

4. Composition selon l'une quelconque des revendications 1 à 3, caractérisée en ce que l'atome de silicium de la formule II porte un radical méthyle.

5. Composition selon l'une quelconque des revendications 1 à 4, caractérisée en ce qu'elle comprend de 10 à 90 % en poids de précurseur(s) de formule I et de 90 à 10 % en poids de précurseur(s) de formule II.

6. Composition selon l'une quelconque des revendications 1 à 4, caractérisée en ce qu'elle comprend de 10 à 70 % en poids de précurseur(s) de formule I et de 90 à 30 % en poids de précurseur(s) de formule II.

7. Composition selon l'une quelconque des revendications 1 à 4, caractérisée en ce qu'elle comprend de 10 à 55 % en poids de précurseur(s) de formule I et 45 à 90 % en poids de précurseur(s) de formule II.

8. Procédé de préparation des compositions selon l'une quelconque des revendications 1 à 7, caractérisé en ce qu'il consiste à mélanger les précurseurs de formule I et II à une température comprise entre 0 et 100°C, sous atmosphère inerte.

9. Compositions selon l'une quelconque des revendications 1 à 7, sous forme de filaments, fibres ou films ou de revêtement.

## Patentansprüche

1. Zusammensetzung für Keramikvorstufen, dadurch gekennzeichnet, daß sie aus
   - mindestens einer Vorstufe mit einer Mehrzahl von Formeleinheiten :

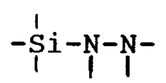

(I)

   - und mindesten einer Vorstufe mit einer Mehrzahl von Formeleinheiten :

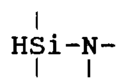

(II)

   besteht; Formeln, in denen die verfügbaren Valenzen der Silizium- und Stickstoffatome an gesättigte aliphatische oder ungesättigte Kohlenwasserstoffreste, oder an mono- oder polycyclische Aryl-, Alkylaryl- oder Arylalkylreste gebunden sind, wobei diese Substituenten identisch oder verschieden sein können, und mindestens eine der verfügbaren Valenzen des Silizium- oder der Stickstoffatome in der Formel (I) und/oder das Stickstoffatom der Formel (II) ein Wasserstoffatom tragen können, und das Siliziumatom in der Formel (II) ein zweites Wasserstoffatom tragen kann, während dann das Stickstoffatom in der gleichen Formel (II) einen Methylrest trägt.

2. Zusammensetzung nach Anspruch 1, dadurch gekennzeichnet, daß die Substituenten der Siliziumatome in den Formeln (I) und (II) unter den 1 bis 8 Kohlenstoffatomen umfassenden gesättigten aliphatischen Kohlenwasserstoffresten, den ungesättigten Resten wie Vinyl und Allyl, den 3 bis 7 Kohlenstoffatome umfassenden alicyclischen Resten, und dem Phenyl-, Benzyl-, Phenylethyl-, Toluyl-, Xylyl- oder Naphthylrest ausgewählt werden.

3. Zusammensetzung nach einem der Ansprüche 1 oder 2, dadurch gekennzeichnet, daß das Siliziumatom der Formel (I) ein Wasserstoffatom oder einen Methylsubstituenten und einen zweiten Substituenten trägt, der unter den Methyl-, Ethyl-, Phenyl- oder Vinylgruppen ausgewählt wird.

4. Zusammensetzung nach einem der Ansprüche 1 bis 3, dadurch gekennzeichnet, daß das Siliziumatom der Formel (II) einen Methylrest trägt.

5. Zusammensetzung nach einem der Ansprüche 1 bis 4, dadurch gekennzeichnet, daß sie zu 10 bis 90 Gew.-% aus der (den) Vorstufe(n) der Formel (I) und zu 90 bis 10 Gew.-% aus der (den) Vorstufe(n) der Formel (II) besteht.

6. Zusammensetzung nach einer der Ansprüche 1 bis 4, dadurch gekennzeichnet, daß sie zu 10 bis 70 Gew.-% aus der (den) Vorstufe(n) der Formel (I) und zu 90 bis 30 Gew.-% aus der (den) Vorstufe(n) der Formel (II) besteht.

7. Zusammensetzung nach einem der Ansprüche 1 bis 4, dadurch gekennzeichnet, daß sie zu 10 bis 55 Gew.-% aus der (den) Vorstufe(n) der Formel (I) und zu 45 bis 90 Gew.-% aus der (den) Vorstufe(n) der Formel (II) besteht.

8. Verfahren zur Herstellung der Zusammensetzung nach einem der Ansprüche 1 bis 7, dadurch gekennzeichnet, daß dieses darin besteht, die Vorstufen der Formel (I) und (II) bei einer Temperatur zwischen 0 und 100°C unter einer inerten Atmosphäre zu vermischen.

9. Zusammensetzungen nach einem der Ansprüche 1 bis 7 in Gestalt von Fäden, Fasern oder Filmen oder Schalen.

## Claims

1. Composition of ceramic precursors, characterised in that it comprises
   - at least one precursor comprising a plurality of units of formula:

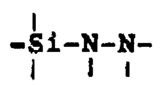

(I)

   - and at least one precursor comprising a plurality of units of formula:

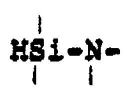

(II)

formulas in which the available valencies of the silicon and nitrogen atoms are linked to a saturated or unsaturated aliphatic hydrocarbon radical, or to a mono- or polycyclic aryl, alkylaryl or arylalkyl radical, these substituents being capable of being identical or different, at least one of the available valencies of the silicon atom or of the nitrogen atoms in formula I and/or the nitrogen atom of formula II being capable of carrying a hydrogen atom, the silicon atom of formula II being capable of carrying a second hydrogen atom, the nitrogen atom in the same formula II carrying then a methyl radical.

2. Composition according to Claim 1, characterised in that in the formulas I and II the substituents of the silicon atoms are chosen from the saturated aliphatic hydrocarbon radicals containing 1 to 8 carbon atoms; the unsaturated radicals such as vinyl, allyl; the alicyclic radicals containing from 3 to 7 carbon atoms; the phenyl, benzyl, phenylethyl, tolyl, xylyl or naphthyl radicals.

3. Composition according to either of Claims 1 and 2, characterised in that the silicon atom of formula I carries a hydrogen atom or a methyl substituent and a substituent chosen from the methyl, ethyl, phenyl or vinyl groups.

4. Composition according to any one of Claims 1 to 3, characterised in that the silicon atom of formula II carries a methyl radical.

5. Composition according to any one of Claims 1 to 4, characterised in that it comprises from between 10 to 90% by weight of precursor(s) of formula I and from between 90 to 10% by weight of precursor(s) of

formula II.

6. Composition according to any one of Claims 1 to 4, characterised in that it comprises from 10 to 70% by weight of precursor(s) of formula I and from 90 to 30% by weight of precursor(s) of formula II.

7. Composition according to any one of Claims 1 to 4 characterised in that it comprises from 10 to 55% by weight of precursor(s) of formula I and from 45 to 90% by weight of precursor(s) of formula II.

8. Method for preparing compositions according to any one of Claims 1 to 7, characterised in that it consists in mixing the precursors of formula I and II at a temperature lying between 0 and 100°C, in an inert atmosphere.

9. Compositions according to any one of Claims 1 to 7, in the form of filaments, fibres or films or of coating.